(19) Europäisches Patentamt / European Patent Office / Office européen des brevets

(11) **EP 3 327 620 A1**

(12) **EUROPEAN PATENT APPLICATION**

(43) Date of publication:
**30.05.2018 Bulletin 2018/22**

(51) Int Cl.:
***G06K 9/00*** (2006.01)

(21) Application number: **17200043.2**

(22) Date of filing: **06.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.11.2016 GB 201619958**

(71) Applicant: **Continental Automotive GmbH 30165 Hannover (DE)**

(72) Inventors:
- **Guerreiro, Rui**
  **Hove, BN3 5PL (GB)**
- **Kadyrov, Alexander**
  **Eastbourne, BN21 4UH (GB)**
- **Sibiryakov, Alexander**
  **Lewes, BN7 1DD (GB)**

(74) Representative: **Bobbert, Christiana Conti Temic microelectronic GmbH Patente & Lizenzen Sieboldstrasse 19 90411 Nürnberg (DE)**

(54) **OBJECT RECOGNITION SYSTEM AND OBJECT RECOGNITION METHOD**

(57) The present invention provides an object recognition system (100, 200) comprising at least one camera (101, 201, 210, 211), which is configured to record an image (102, 202, 212, 213) of the surroundings of the camera (101, 201, 210, 211), and an image processor (107, 207), which is configured to analyze the recorded image (102, 202, 212, 213) and detect objects (103, 104, 303, 304, 404, 504) in the recorded image (102, 202, 212, 213), which cross the horizon line (105, 205, 214, 305, 505) in the recorded image (102, 202, 212, 213). Further, the present invention provides a respective object recognition method.

FIG 4

**Description**

TECHNICAL FIELD

The present invention relates to an object recognition system. The present invention further relates to an object recognition method.

BACKGROUND

Although applicable in principal to any system that uses cameras, the present invention and its underlying problem will be hereinafter described in combination with road vehicles. However, the present invention can e.g. also be used with other types of vehicles or e.g. surveillance systems.

Modern vehicles support the driver with a plurality of different driver assistance systems. Such assistance systems can range from simple systems that only bring to the driver's attention certain facts about the vehicle or its surroundings.

However, more sophisticated driver assistance systems can at least temporally take control over the vehicle and relieve the driver of the burden to actively control the vehicle.

Especially in case that one of the latter systems is used in the vehicle, detailed knowledge of the vehicle surroundings are required for the systems to accurately control the vehicle.

There are currently a number of approaches for detecting objects or obstacles in images. For example stereo cameras or ultrasound (or equivalent) sensors enable reliable estimation of 3D space and, therefore, the reliable detection of obstacles. However, such systems require hardware that may be very complex and/or expensive.

Against this background, the problem addressed by the present invention is to provide a simple and reliable method of detecting objects.

SUMMARY

The present invention solves this problem by an object recognition system with the features of claim 1 and an object recognition method with the features of claim 8.

Accordingly it is provided:

An object recognition system, e.g. for a vehicle. The object recognition system comprises at least one camera, which is configured to record an image, or a sequence of images, like e.g. a video, of the surroundings of the camera, and an image processor, which is configured to analyze the recorded image and detect objects, e.g. 3D or real world objects, in the recorded image, which cross the horizon line in the recorded image. The cameras can e.g. be the cameras installed within a surround view system of the vehicle.

Further it is provided:

An object recognition method comprising recording an image of the surroundings of e.g. a vehicle, analyzing the recorded image for objects, which cross the horizon line in the recorded image, and providing the objects, which cross the horizon line in the recorded image, as detected objects.

Static approaches, which detect objects with a single recorded image by using assumptions about their shape, color, transition characteristics or the like may often fail, because the assumptions cannot represent reality with sufficient accuracy. Further, structure from motion approaches, motion segmentation approaches, and frame subtraction methods are computationally very intensive and all easily fail with static objects.

The present invention is based on the finding that objects around a vehicle in the recorded camera image always cross the horizon line of the camera, if they are taller than the vertical position of the camera on the vehicle. That means they will be seen going from below the horizon line to above the horizon line. Therefore, a simple identification of objects that cross the horizon line can reveal real world objects around the vehicle that may form an obstacle for the vehicle and have to be taken into account when navigating the vehicle.

The present invention uses this knowledge and provides the image processor, which detects objects that cross the horizon line of the respective recorded image. By detecting objects in the recorded images that cross the horizon line, the image processor can therefore easily detect relevant real world objects, i.e. objects that exist and/or move around the vehicle.

The present invention therefore allows easily detecting relevant objects around a vehicle with little computational effort. The knowledge about such real world objects can then be used e.g. by driver assistant systems to plan the trajectory of the vehicle or simply highlighting the objects e.g. on a display for the driver of the vehicle.

Further embodiments of the present invention are subject of the further subclaims and of the following description, referring to the drawings.

In a possible embodiment, the horizon line can define or be defined by a 3D plane that is parallel to ground, e.g. the ground surrounding the vehicle, and intersects the camera at its vertical position, i.e. the horizon line is positioned at the same height as the camera. Typical heights of cameras in vehicles e.g. lay between 0 and 1 meter, especially between 0,3 and 0,7 meters or 0,5 meters. The horizon line can e.g. be computed using the intrinsic and extrinsic parameters of the camera. The horizon line can e.g. be computed knowing the orientation or angle of the camera with relation to ground and the center point of the camera in the recorded image. These computations can further take into account any distortions caused e.g. by camera lenses or other optical devices used with the camera.

In a possible embodiment, the image processor can comprise a line and/or contour extraction unit, which is configured to extract lines and/or contours of objects in the recorded image. With the present invention detecting objects does not require a most accurate full object detection. Instead it is enough to roughly detect the boundary lines or contours of the objects to identify real world objects. Therefore a computationally simple method of detecting objects by their boundary lines or contours can be used for detecting objects in the recorded images.

In a possible embodiment, the image processor can comprise an object classification unit, which can be configured to classify entities in the images as objects, if their lines and/or contours cross the horizon line of the image. After identifying lines in the recorded images with the present invention it is very simple to classify the detected lines as objects or e.g. as road painting. The positions of the start points of the lines or contours and their end points can e.g. simply be compared to the horizon line. If both are on the same side, the entity is not classified as object. If, however, the start point and end point of a contour or line are on different sides of the horizon line, the entity is classified as object.

In a possible embodiment, the object recognition system can comprise a position calculation device, which is configured to calculate the positions of the detected objects, e.g. in relation to the camera or the vehicle, based on the detected objects position in the image. Knowing the positions of the objects in the images allows taking appropriate actions when maneuvering the vehicle. An autonomous driving system can e.g. stop the car or change the trajectory of the car. Other driver assistance systems can e.g. point out the object to the driver or initiate an emergency brake.

In a possible embodiment, the position calculation device can be configured to detect if an object is within a predefined area around the camera. The predefined area can e.g. be called "danger area" and define a zone around the vehicle that should not be entered by any object or at least not by moving objects like e.g. humans or animals. If an object is detected in the danger zone the vehicle can e.g. be stopped or slowed down.

In a possible embodiment, the position calculation device can be configured to detect if an object is within a trajectory of the camera when the camera is moving, and especially wherein the position calculation device is configured to segment the detected objects from the scene and calculate their position assuming that their lower part is standing on the ground. If it is assumed that the lower end of the detected lines or boundaries is on the ground, the position of the object in the real world can be calculated by respective transformations. With the detected position information and knowing the vehicle motion, the time to collision can be computed and an appropriate action can be taken. A possible algorithm could e.g. comprise the following steps:

1. Denote 2D-coordinates of the lower end of the detected line in the image by p=(x,y)

2. Denote the height of the camera above the ground (which is the distance from the camera centre to the ground plane) by d

3. Transform point p to unit sphere centred at the camera centre and obtain a 3D-point P = (X,Y,Z).

Such transformation can e.g. be obtained from camera calibration: P = CalibrationBasedTransformation(p)

4. Intersect ray passing via camera centre (0,0,d) and detected point (X,Y,Z+d) with ground plane given by equation Z=0 and obtain a point on the ground (Xobj, Yobj, 0).

5. So far, the point Acam = (Xobj, Yobj, 0) is obtained in the local coordinate system of the camera. The same point in the world coordinate system can be obtained as:

$$\texttt{Aworld = R * Acam + t,}$$

where

Aworld is 3D-point in world coordinate system, R is 3x3 rotation matrix and t is 3D translation vector. Both R and t are obtained by camera ego-motion estimation algorithms.

With the present invention if an object is not taller than the vertical position of the camera in the vehicle, it will be below the horizon line and will not be detected as object. This means that only 3D objects that are very small, i.e., lower than the camera height, will not be detected as 3D objects and will be mistaken for features on a road. However to detect such objects the present invention can also be combined with any other object recognition means. For example modern vehicles usually comprise ultra sound distance sensors in parking assistance systems of the vehicle. Such sensors could e.g. complement the present invention to detect small objects near the vehicle.

It is understood that the single components of the present invention can be embodied as hardware or software or a combination of both. The image processor and/or the position calculation device can therefore e.g. comprise a processor, a CPLD, a FPGA or ASIC or computer readable instructions, program code, functions or methods. It is further understood that the object recognition system can e.g. be provided as a separate system in a vehicle or can be included as a program or software component in a system that is already present in a vehicle.

BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:

Fig. 1    shows a block diagram of an embodiment of an object recognition system according to the present invention;

Fig. 2    shows a block diagram of another embodiment of an object recognition system according to the present invention;

Fig. 3    shows a flow diagram of an embodiment of an object recognition method according to the present invention;

Fig. 4    shows an image processed according to an embodiment of the present invention;

Fig. 5    shows another image processed according to an embodiment of the present invention; and

Fig. 6    shows another image processed according to an embodiment of the present invention.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

In the drawings, like, functionally equivalent and identically operating elements, features and components are provided with like reference signs in each case, unless stated otherwise.

DETAILED DESCRIPTION OF THE DRAWINGS

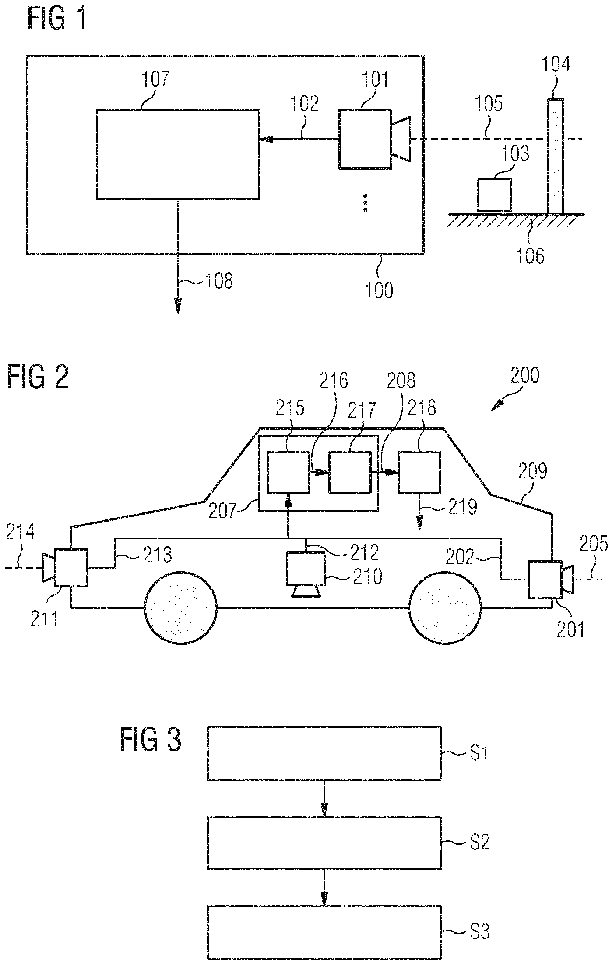

Fig. 1 shows a block diagram of an object recognition system 100. The object recognition system 100 comprises a camera 101, wherein more cameras are hinted at by three dots. The camera 101 records images 102 of the surroundings of the camera 101 and provides the recorded images 102 to an image processor 107.

The camera 101 can e.g. be a single camera in e.g. a vehicle. However, the camera 101 can also be a camera system that comprises a plurality of cameras and outputs recorded images 102. Such a camera system can e.g. be a surround view system, which combines the images of a plurality of cameras into a single image, which can then be further processed.

The recorded images 102 are then provided to the image processor 107, which performs an image analysis to detect objects in the surroundings of the camera 101 based on the recorded images 102.

In Fig. 1 two objects 103, 104 are just exemplarily shown. Both objects 103, 104 are standing on the ground and have different heights. The object 103 is small and does not reach over the horizon line 105 of camera 101. The object 104 is taller and reaches over the horizon line 105. The horizon line 105 defines a 3D plane that is parallel to the ground 106 and intersects the camera 101 at its vertical position.

The image processor 107 will take the recorded images 102 and analyze the recorded images 102 for the presence of objects. However, instead of performing complex and computationally expensive processing tasks, the image processor 107 will simply look for objects that cross the horizon line 105.

For such objects, as e.g. object 104, the present invention therefore provides a simple and effective method of detecting the objects 104. Small objects, like object 103, can however still be detected with additional means. In a vehicle e.g. with the help of ultra sound sensors.

Fig. 2 shows another object recognition system 200 embedded in a vehicle 209. The object recognition system 200 comprises three cameras 201, 210, 211. It is understood, that more cameras are also possible. The cameras 201, 210, 211 provide single images 202, 212, 213, which can e.g. be combined into a single image. This can e.g. be done by a surround view system of vehicle 209.

The image processor 207 of the object recognition system 200 comprises a line and/or contour extraction unit 215, which is coupled to an object classification unit 217. The object classification unit 217 is coupled to a position calculation device 218.

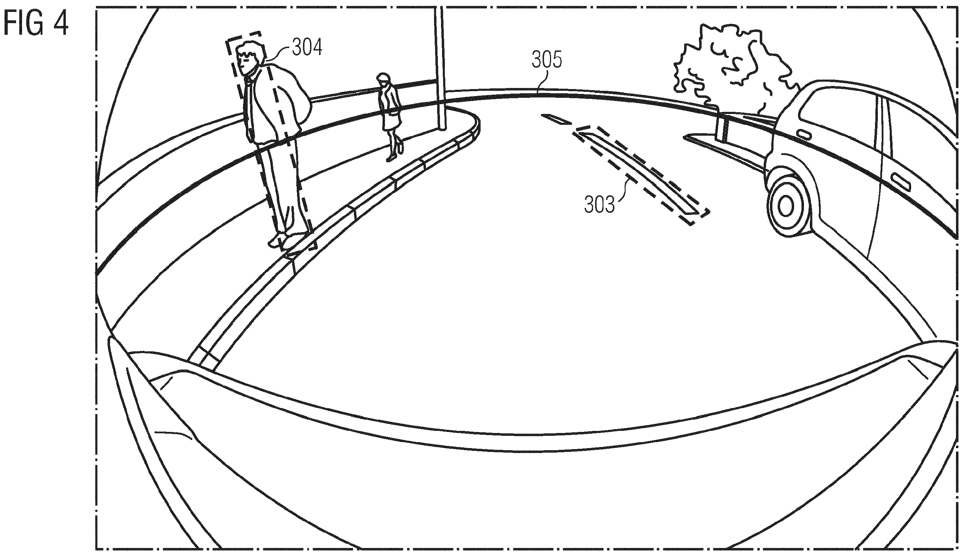

The line and/or contour extraction unit 215 receives the recorded images 202, 212, 213, extracts lines and/or contours 216 of objects in the recorded images 202, 212, 213. As will be seen in Fig. 4, such a line or contour extraction can be rather coarse, since it is only necessary to differentiate objects that reach from one side of the horizon line 205, 214 to the other side of the horizon line 205, 214.

It is understood, that the horizon lines 205, 214 can e.g. be predefined at development time of the object recognition system 200. Further, the horizon lines 205, 214 can e.g. be calculated based on intrinsic and extrinsic parameters of the cameras 205, 210, 211 including the positions of the cameras 205, 210, 211, especially in the vehicle 209, and the orientations of the cameras 205, 210, 211. Further parameters can comprise information about the lenses of the camera and the like. The horizon lines 205, 214 can e.g. be calculated using the following algorithm:

1. The function CalibrationBasedTransformation mentioned above includes so-called Extrinsic rotation matrix Rext. It is composed of three 3D basis vectors of the external coordinate system, usually attached to the ground plane. One of basis vectors is the ground plane normal. Denote it by n.

2. The horizon line is defined by all points H = (Hx, Hy, Hz) on the unit sphere centred at the camera centre, so that dot(H,n) = 0, where dot(...) is the dot product of two vectors.

3. Depending on sign of dot(H,n), the point H is above or below the horizon.

4. The horizon points H can then be transformed from the unit sphere back to the original image using inverse transform: h = CalibrationBasedInverseTransformation(H)

The extracted lines and/or contours 216 are then provided to the object classification unit 217, which classifies entities in the recorded images 202, 212, 213 as objects, if the respective lines and/or contours 216 cross the horizon line 205, 214 of the respective image 202, 212, 213.

Detected objects 208 are then passed to the position calculation device 218, which calculates the positions of the detected objects 208 based on the detected objects 208 position in the respective image 202, 212, 213.

The position calculation device 218 can e.g. be used to detect if an object is within a predefined area around the camera 201, 210, 211. Such an area can e.g. be a "danger area" where no object should be detected. The vehicle 209 can than then e.g. be stopped.

The position calculation device 218 can also be used to e.g. detect if an object is within a trajectory of the camera 201, 210, 211 when the camera 201, 210, 211 or the vehicle 209 is moving.

The position calculation device 218 can e.g. segment the detected objects 208 from the rest of the image, e.g. the scene, and calculate the positions of the detected objects 208 assuming that their lower part is standing on the ground.

Fig. 3 shows a flow diagram of an object recognition method.

The method comprises recording S1 an image 102, 202, 212, 213 of the surroundings of the vehicle 209. Further, the recorded image 102, 202, 212, 213 is analyzed S2 for objects 103, 104, 303, 304, 404, 504, which cross the horizon line 105, 205, 214, 305, 505 in the recorded image 102, 202, 212, 213. The horizon line 105, 205, 214, 305, 505 can e.g. define a 3D plane that is parallel to ground 106 and intersects a camera 101, 201, 210, 211 that recorded the image 102, 202, 212, 213 at its vertical position.

Finally, the objects 103, 104, 303, 304, 404, 504, which cross the horizon line 105, 205, 214, 305, 505 in the recorded image 102, 202, 212, 213 are provided as detected objects 108, 208.

Analyzing S2 can comprise extracting lines and/or contours 216 of objects 103, 104, 303, 304, 404, 504 in the recorded image 102, 202, 212, 213. Entities in the images 102, 202, 212, 213 can then be classified as objects 103, 104, 303, 304, 404, 504, if their lines and/or contours 216 cross the horizon line 105, 205, 214, 305, 505 of the image 102, 202, 212, 213.

Further, in the object recognition method the positions of the detected objects 108, 208 can be calculated based on the detected objects 108, 208 positions in the image 102, 202, 212, 213. It can further be determined if an object 103, 104, 303, 304, 404, 504 is within a predefined area around the camera 101, 201, 210, 211.

Finally, for a moving camera 101, 201, 210, 211, like e.g. a camera 101, 201, 210, 211 on a vehicle 209, it can be detected if an object 103, 104, 303, 304, 404, 504 is within a trajectory of the camera 101, 201, 210, 211. This can e.g. be achieved by segmenting the detected objects 108, 208 from the scene and calculating their position assuming that their lower part is standing on the ground 106.

Fig. 4 shows an image processed according to an embodiment of the present invention. In the image the rear of a vehicle is shown, recorded with a fish eye camera.

In the image the horizon line 305 of the camera is shown. Further two objects 303, 304 are shown. Object 303 is a line on the ground and object 304 is a person walking on the sidewalk.

In Fig. 4 the principle underlying the present invention can be seen clearly. While the line on the ground 303 does not cross the horizon line 305, the person 304, or rather the contour of the person 304, crosses the horizon line 305. Further it can be seen that e.g. the street and all lines on the street, even the far away lines, always stay beneath the horizon line 305.

In Fig. 4 it can further be seen, that a very rough or coarse detection of the objects 303, 304 is sufficient to perform the object classification according to the present invention.

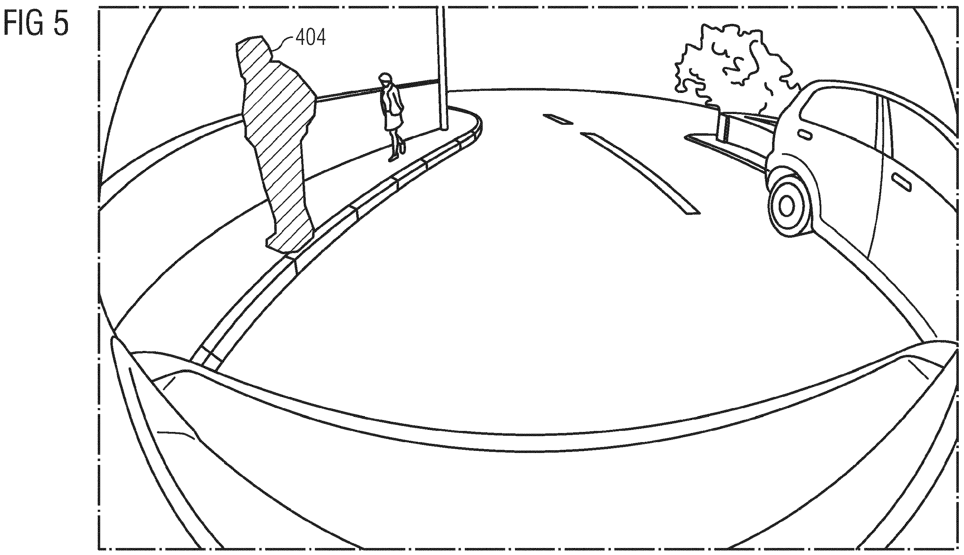

Fig. 5 shows another image processed according to an embodiment of the present invention. In Fig. 5 the entity, which was detected as object, here the person 404, is segmented from the rest of the image.

The position of the camera, especially the height of the camera, and the respective lens geometry is known. Therefore, in the image every pixel at least below the horizon line can be mapped to a position on the ground in the real world by e.g. respective transformations. To calculate the position of the person 404 it is then assumed that the person is standing in the ground. The position of the person 404 can therefore be determined by geometrical transformations.

If the person would e.g. stand in the trajectory of a vehicle, the trajectory could be changed or the vehicle could be stopped. In case of Fig. 5, the person is on the sidewalk and no actions have to be performed.

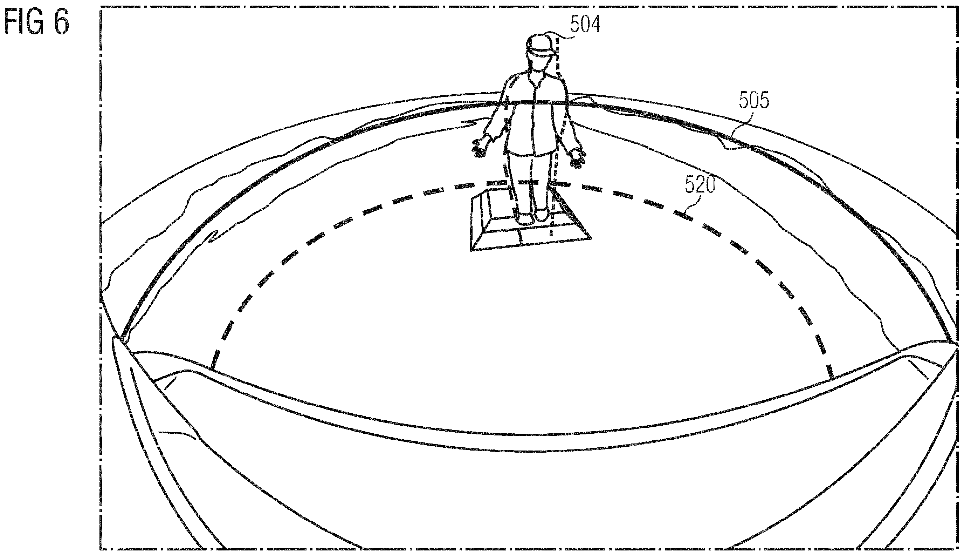

Fig. 6 shows another image processed according to an embodiment of the present invention. In Fig. 6 a danger zone 520, e.g. a zone where no object should be present, is defined and shown by a dashed line. The danger zone 520 can also be calculated e.g. based on position of the camera, especially the height of the camera, and the respective lens geometry. As an alternative, the danger zone 520 can e.g. be predefined during development of the respective object recognition system.

In Fig. 5 the two-step approach of the present invention can be seen. In a first step, it is detected if an object is present at all. This is performed as already indicated above, by detecting objects with contours that cross the horizon line 505. In a second step it can be verified if any one of the detected objects, or its contour, crosses the line for the danger zone 520, as can be seen in Fig. 6.

In this case, a vehicle system can e.g. alert a driver of the vehicle or in case of autonomous vehicle systems can stop the vehicle.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

List of reference signs

| | |
|---|---|
| 100, 200 | object recognition system |
| 101, 201, 210, 211 | camera |
| 102, 202, 212, 213 | image |
| 103, 104, 303, 304, 404, 504 | objects |
| 105, 205, 214, 305, 505 | horizon line |
| 106 | ground |
| 107, 207 | image processor |
| 108, 208 | detected objects |
| 209 | vehicle |
| 215 | line and/or contour extraction unit |
| 216 | lines and/or contours |
| 217 | object classification unit |
| 218 | position calculation device |
| 219 | calculated positions |

520    danger zone

**Claims**

1. Object recognition system (100, 200) comprising:

    at least one camera (101, 201, 210, 211), which is configured to record an image (102, 202, 212, 213) of the surroundings of the camera (101, 201, 210, 211), and
    an image processor (107, 207), which is configured to analyze the recorded image (102, 202, 212, 213) and detect objects (103, 104, 303, 304, 404, 504) in the recorded image (102, 202, 212, 213), which cross the horizon line (105, 205, 214, 305, 505) in the recorded image (102, 202, 212, 213).

2. Object recognition system (100, 200) according to claim 1, wherein the horizon line (105, 205, 214, 305, 505) defines a 3D plane that is parallel to ground (106) and intersects the camera (101, 201, 210, 211) at its vertical position.

3. Object recognition system (100, 200) according to any one of the preceding claims, wherein the image processor (107, 207) comprises a line and/or contour extraction unit (215), which is configured to extract lines and/or contours (216) of objects (103, 104, 303, 304, 404, 504) in the recorded image (102, 202, 212, 213).

4. Object recognition system (100, 200) according to claim 3, wherein the image processor (107, 207) comprises an object classification unit (217), which is configured to classify entities in the images (102, 202, 212, 213) as objects (103, 104, 303, 304, 404, 504), if their lines and/or contours (216) cross the horizon line (105, 205, 214, 305, 505) of the image (102, 202, 212, 213).

5. Object recognition system (100, 200) according to any one of the preceding claims, comprising a position calculation device (218), which is configured to calculate the positions of the detected objects (108, 208) in the real world based on the detected objects (108, 208) position in the image (102, 202, 212, 213).

6. Object recognition system (100, 200) according to claim 5, wherein the position calculation device (218) is configured to detect if an object (103, 104, 303, 304, 404, 504) is within a predefined area around the camera (101, 201, 210, 211).

7. Object recognition system (100, 200) according to claims 5 or 6, wherein the position calculation device (218) is configured to detect if an object (103, 104, 303, 304, 404, 504) is within a trajectory of the camera (101, 201, 210, 211) when the camera (101, 201, 210, 211) is moving, and especially wherein the position calculation device (218) is configured to segment the detected objects (108, 208) from the scene and calculate their position assuming that their lower part is standing on the ground (106).

8. Object recognition method comprising:

    recording (S1) an image (102, 202, 212, 213),
    analyzing (S2) the recorded image (102, 202, 212, 213) for objects (103, 104, 303, 304, 404, 504), which cross the horizon line (105, 205, 214, 305, 505) in the recorded image (102, 202, 212, 213), and

providing (S3) the objects (103, 104, 303, 304, 404, 504), which cross the horizon line (105, 205, 214, 305, 505) in the recorded image (102, 202, 212, 213), as detected objects (108, 208).

9. Object recognition method according to claim 8, wherein the horizon line (105, 205, 214, 305, 505) defines a 3D plane that is parallel to ground (106) and intersects a camera (101, 201, 210, 211) that recorded the image (102, 202, 212, 213) at its vertical position.

10. Object recognition method according to any one of the preceding claims 8 and 9, wherein analyzing (S2) comprises extracting lines and/or contours (216) of objects (103, 104, 303, 304, 404, 504) in the recorded image (102, 202, 212, 213).

11. Object recognition method according to claim 10, wherein analyzing (S2) comprises classifying entities in the images (102, 202, 212, 213) as objects (103, 104, 303, 304, 404, 504), if their lines and/or contours (216) cross the horizon line (105, 205, 214, 305, 505) of the image (102, 202, 212, 213).

12. Object recognition method according to any one of the preceding claims 8 to 11, comprising calculating the positions of the detected objects (108, 208) in the real world based on the detected objects (108, 208) position in the image (102, 202, 212, 213).

13. Object recognition method according to claim 12, comprising detecting if an object (103, 104, 303, 304, 404, 504) is within a predefined area around the camera (101, 201, 210, 211).

14. Object recognition method according to claims 12 or 13, comprising detecting if an object (103, 104, 303, 304, 404, 504) is within a trajectory of the camera (101, 201, 210, 211) when the camera (101, 201, 210, 211) is moving, and especially comprising segmenting the detected objects (108, 208) from the scene and calculating their position assuming that their lower part is standing on the ground (106).

## FIG 1

## FIG 2

## FIG 3

FIG 4

FIG 5

FIG 6

Europäisches
Patentamt

European
Patent Office

Office européen
des brevets

## EUROPEAN SEARCH REPORT

Application Number

EP 17 20 0043

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/162415 A1 (WU YU-HSIANG [TW] ET AL) 28 June 2012 (2012-06-28) * paragraphs [0011], [0045]; figures 3A-3C * ----- | 1-14 | INV. G06K9/00 |
| X | US 2015/269732 A1 (LIAW MING-JIUN [TW]) 24 September 2015 (2015-09-24) * whole document, especially abstract; figs. 3,4; paragrpahs 39- 41 * ----- | 1-14 | |

TECHNICAL FIELDS
SEARCHED (IPC)

G06K

The present search report has been drawn up for all claims

| Place of search | Date of completion of the search | Examiner |
|---|---|---|
| The Hague | 14 March 2018 | Neubüser, Bernhard |

EPO FORM 1503 03.82 (P04C01)

**ANNEX TO THE EUROPEAN SEARCH REPORT
ON EUROPEAN PATENT APPLICATION NO.**

EP 17 20 0043

This annex lists the patent family members relating to the patent documents cited in  the above-mentioned European search report.
The members are as contained in the European Patent Office EDP file on
The European Patent Office is in no way liable for these particulars which are merely given for the purpose of information.

14-03-2018

| Patent document cited in search report | | | Publication date | Patent family member(s) | | Publication date |
|---|---|---|---|---|---|---|
| US 2012162415 | A1 | | 28-06-2012 | TW 201226234 A | | 01-07-2012 |
| | | | | US 2012162415 A1 | | 28-06-2012 |
| US 2015269732 | A1 | | 24-09-2015 | TW 201536609 A | | 01-10-2015 |
| | | | | US 2015269732 A1 | | 24-09-2015 |

EPO FORM P0459

For more details about this annex : see Official Journal of the European Patent Office, No. 12/82